# EUROPÄISCHE PATENTSCHRIFT

(11) **EP 4 077 981 B1**
(45) Veröffentlichungstag und Bekanntmachung des Hinweises auf die Patenterteilung: **16.10.2024**
(21) Anmeldenummer: 20837956.0
(22) Anmeldetag: 16.12.2020
(51) Int. Cl.: F16H 63/18, F16H 63/34, F16H 61/32

(54) **SCHALTWALZENANORDNUNG FÜR EINE SCHALTVORRICHTUNG EINER GETRIEBEANORDNUNG**
GEAR SHIFT DRUM ASSEMBLY FOR A SHIFT DEVICE OF A TRANSMISSION ASSEMBLY
ENSEMBLE TAMBOUR DE CHANGEMENT DE VITESSE POUR DISPOSITIF DE CHANGEMENT DE VITESSE DE BLOC DE TRANSMISSION

(30) Priorität: 19.12.2019 DE 102019220181
(43) Veröffentlichungstag der Anmeldung: 26.10.2022
(73) Patentinhaber: Magna PT B.V. & Co. KG, 74199 Untergruppenbach (DE)
(72) Erfinder: KRISTOFCSAK, Andras, 51375 Leverkusen (DE); KÖNIG, Axel, 50733 Köln (DE)
(74) Vertreter: Reuter, Silke Beatrix
(86) Internationale Anmeldenummer: PCT/EP2020/086543
(87) Internationale Veröffentlichungsnummer: WO 2021/122831

(56) Entgegenhaltungen:
- EP-A1- 2 966 320
- DE-A1- 102016 201 860
- US-A1- 2010 275 714

## Beschreibung

Die vorliegende Erfindung betrifft eine Schaltwalzenanordnung für eine Schaltvorrichtung einer Getriebeanordnung, insbesondere für Kraftfahrzeuge, mit einem Schaltwalzenkörper, der um eine Schaltwalzenachse drehbar ist, und mit einer Anschlageinrichtung zum Referenzieren einer Drehstellung des Schaltwalzenkörpers.

Weiterhin betrifft die vorliegende Erfindung eine Getriebeanordnung für ein Kraftfahrzeug, mit einer Schaltvorrichtung zum Schalten von Gangstufen, wobei die Schaltvorrichtung eine Schaltwalzenanordnung aufweist.

Schaltvorrichtungen für Getriebe sind beispielsweise aus der DE 196 55 083 B4 und der WO 97/ 02 963 A2 bekannt.

Eine Vorrichtung zum Arretieren einer Schaltwalze eines sequentiellen Getriebes ist aus der DE 10 2016 201 860 A1 bekannt. Diese Vorrichtung umfasst einen Aktuator, der mittels einer Steuereinrichtung in einen aktivierten Zustand überführbar ist. Im aktivierten Zustand greift der Aktuator direkt oder indirekt so an der Schaltwalze an, dass die Schaltwalze in einer Zwischenposition zwischen zwei Gängen gehalten wird. Hierdurch wird ein weitgehend lastfreier Gangwechsel sichergestellt, bei dem die Drehzahlen der beteiligten Zahnräder des Getriebes aufeinander abgestimmt sind.

Das Dokument WO 2015/ 149 797 A1 offenbart eine Betätigungsvorrichtung zum Betätigen eines Getriebes, mit einer drehbaren Schaltwalze, wobei ein mit der Schaltwalze drehfest verbundenes Referenzierungselement derart mit einer Signalindikationseinrichtung zusammenwirkt, dass bei einem relativen Verschieben von der Signalindikationseinrichtung und dem Referenzierungselement in einer bestimmten Drehstellung der Schaltwalze ein Positionssignal erzeugbar ist. Das Positionssignal ist durch einen die Antriebskraft des Antriebsmotors in der bestimmten Drehstellung verändernden, mechanischen Widerstand erzeugbar.

Aus dem Dokument EP 1 286 088 A1 ist es bekannt, an einer Schaltwalze einen Magnetring festzulegen, der zur Drehpositionserfassung der jeweiligen Schaltwalze mittels geeigneter Sensoren ausgebildet ist.

Aus der DE 10 2018 214 755 B3 ist eine Schaltwalzenanordung für eine Schaltvorrichtung einer Getriebeanordnung für Kraftfahrzeuge bekannt. Diese Schaltwalzenanordnung umfasst einen Schaltwalzenkörper, der um eine Schaltwalzenachse drehbar ist, und eine Anschlageinrichtung zum Referenzieren einer Drehstellung des Schaltwalzenkörpers. Die Anschlageinrichtung weist ein Anschlagelement auf, und ist derart ausgebildet, dass es in einer ersten Referenzposition mit einem Gehäuseanschlag in Kontakt kommen kann. Das Anschlagelement ist in Drehrichtung begrenzt verdrehbar in Bezug auf den Schaltwalzenkörper gelagert.

Des Weiteren ist aus der DE 10 2014 115 373 A1 eine Schaltanordnung für ein Kraftfahrzeuggetriebe bekannt.

Eine Schaltwalze für ein Kraftfahrzeuggetriebe und ein Schaltverfahren ist in der DE 10 2016 124 403 A1 offenbart.

Wie oben beschrieben, kann zum Referenzieren der Drehposition ein rotatorischer Endanschlag in die Schaltwalzen integriert werden. Hierbei ist jedoch die Verdrehbarkeit der Schaltwalzen begrenzt. Breite und massive Anschläge reduzieren den zur Verfügung stehenden Verdrehwinkel der Schaltwalze zum Teil signifikant.

Bei bekannten Schaltwalzenanordnungen, die einen fest mit dem Schaltwalzenkörper verbundenen Anschlag aufweisen, ergibt sich die maximale Verdrehbarkeit des Schaltwalzenkörpers durch 360° abzüglich des Umfangswinkels des Anschlagelementes und abzüglich eines Umfangswinkels des Referenzelementes, das beispielsweise ein gehäusefestes Element, wie ein Gehäuseanschlag sein kann. Hier kann der maximale Verdrehwinkel im Stand der Technik nur bei 290° liegen, wenn sich beispielsweise das Anschlagelement über 35° erstreckt und wenn sich der Gehäuseanschlag ebenfalls um 35° erstreckt.

Sofern Schaltwalzenanordnungen eine über 360° hinausgehende Verdrehung erfordern, ist ein Referenzieren auf diese Art und Weise nicht möglich.

Aus der EP 2 966 320 A1 ist eine Schaltwalzenanordnung mit den Merkmalen des Oberbegriffs des Anspruchs 1 bekannt. Dabei ist die Trommel mit den Nuten, in denen die Vorsprünge aufgenommen werden, in die Schalttrommeln, die separat für die jeweiligen Nuten vorgesehen sind, und die Basistrommel unterteilt. Wenn jede der Schaltungstrommeln durch den Verriegelungsmechanismus in den freien Zustand versetzt wird, kann sich die Schaltungstrommel unabhängig in axialer Richtung relativ zur Basistrommel bewegen. Da jede der Schaltwalzen in axialer Richtung gleitet, während der entsprechende Vorsprung in der Nut gehalten wird, kann die Schaltwalze gedreht werden, während die Position jeder Schaltmuffe unverändert bleibt. Dementsprechend kann die Schaltwalze gedreht werden, wenn jede der Schaltwalzen in den freien Zustand gebracht wird, während jede der Schaltmuffen in einer Zwischenposition gehalten wird, in der keine Gangposition zum Fahren des Fahrzeugs gebildet wird, und es wird unnötig, einen Mechanismus zum Bewegen der Vorsprünge weg von den Nuten oder zum Einsetzen der Vorsprünge in die Nuten bereitzustellen. Da der Verriegelungsmechanismus in der Basistrommel vorgesehen ist, die in einem Raum radial innerhalb der Schaltungstrommeln montiert ist, ist auch kein großer Bauraum in radialer Richtung um die Achse erforderlich. Somit kann bei dem e Mehrgang-Fahrzeuggetriebe der Parallelwellen-Schaltmechanismus mit konstantem Eingriff schnell in die gegebene Neutralstellung geschaltet werden, und es ist weniger wahrscheinlich oder unwahrscheinlich, dass die Größe des Getriebes erhöht wird. Wenn sich die Schalttrommeln im verriegelten Zustand befinden, sind die Schalttrommeln und die Basistrommel integriert; daher können die Schalttrommeln gedreht werden, während die Gangposition des Parallelwellen-Konstant-Schaltmechanismus sequentiell geändert wird, und zwar im Wesentlichen auf die gleiche Weise wie bei einem Mehrgang-Fahrzeuggetriebe mit einer Trommel, die nicht in Schalttrommeln und eine Basistrommel unterteilt ist.

Das Mehrgang-Fahrzeuggetriebe kann der Sperrmechanismus eine Betätigungswelle und einen Sperrstift umfassen. Die Betätigungswelle kann in einem Raum radial innerhalb der Basistrommel montiert werden, so dass sich die Betätigungswelle in der axialen Richtung der Basistrommel bewegen kann. Der Sperrstift kann in der Basistrommel so aufgenommen werden, dass ein radial äußerer distaler Endabschnitt des Sperrstifts und ein radial innerer distaler Endabschnitt des Sperrstifts, in radialer Richtung der Basistrommel gesehen, aus der Basistrommel herausragen können. Die Betätigungswelle kann eine äußere Umfangsfläche mit einer Gleitfläche und einer vertieften Fläche aufweisen, die in axialer Richtung der Basistrommel nebeneinander liegen. Die Gleitfläche kann in einem Zustand, in dem der radial äußere distale Endabschnitt des Sperrstifts aus der Basistrommel herausragt, mit dem radial inneren distalen Endabschnitt des Sperrstifts in Kontakt sein. Die vertiefte Fläche kann den radial inneren distalen Endabschnitt des Sicherungsstifts in einem Zustand aufnehmen, in dem der radial äußere distale Endabschnitt des Sicherungsstifts nicht aus der Basistrommel herausragt. Die Schaltwalze kann eine Eingriffsöffnung aufweisen, die in einer inneren Umfangsfläche der Schaltwalze vorgesehen ist. Der radial äußere distale Endabschnitt des Sicherungsstifts kann so beschaffen sein, dass er in dem Eingriffsloch aufgenommen werden kann, so dass sich die Schaltwalze nicht relativ zur Basistrommel in der axialen Richtung der Basistrommel bewegen kann.

US 2010/275714 A1 zeigt eine Steuervorrichtung, die einen Elektromotor, ein Untersetzungsgetriebe, eine Welle, die durch den Elektromotor über das Untersetzungsgetriebe betätigt werden kann, und eine Trommel, die auf der Welle so angebracht ist, dass sie zur Drehung damit verbunden ist, jedoch relativ dazu frei verschiebbar ist, umfasst. Die Trommel weist auf ihrer zylindrischen Seitenfläche eine Führungsnut auf, in der eine Vielzahl von Zapfen geführt sind, wobei jeder der Zapfen antriebsmäßig zur Translation mit einem jeweiligen Schaltfinger derart verbunden ist, dass die Rotationsbewegung der Trommel in die Translationsbewegung der Schaltfinger umgewandelt wird, um den Eingriff der Zahnräder gemäß vorbestimmten Betriebsmodi zu steuern. Die Steuervorrichtung umfasst ferner eine Verriegelungsvorrichtung, die angeordnet ist, um die Translationsbewegung der Trommel während der Synchronisations- und Zahnradeingriffsphasen zu verriegeln und um die Translationsbewegung der Trommel nach Abschluss des Eingriffs des Zahnrads zu entriegeln

Insbesondere durch die Hybridisierung von Getrieben entstehen neue Herausforderungen an die Schaltvorrichtungen. Unter Umständen ist es vorteilhaft, wenn die Schaltwalze in beiden Verdrehrichtungen beliebig/endlos verdreht werden kann.

Es ist vor diesem Hintergrund eine Aufgabe der Erfindung, eine Schaltwalzenanordnung sowie eine Getriebeeinheit zu schaffen, bei denen die Probleme aus dem Stand der Technik wenigstens teilweise verringert werden und vorzugsweise eine Schaltwalzenanordnung zu schaffen, die in beide Verdrehrichtungen endlos verdreht werden kann und eine einfache Möglichkeit einer Referenzierung des Schaltwinkels/Verdrehwinkels bietet.

Die obige Aufgabe wird gelöst durch eine Schaltwalzenanordnung nach Anspruch 1.

Besondere Ausführungsarten der Erfindung werden in den abhängigen Ansprüchen definiert.

Ausführungsbeispiele der Erfindung sind in den Zeichnungen dargestellt und werden in der nachfolgenden Beschreibung näher erläutert. Es zeigen:
- Fig. 1a: eine schematische Darstellung eines Antriebsstranges eines Kraftfahrzeuges mit einer Getriebeeinheit und einer Schaltwalzenanordnung,
- Fig. 1b: eine schematische Darstellung eines Querschnitts einer Schaltwalzenanordnung mit Referenzelement,
- Fig. 2: eine perspektivische erste Ansicht auf eine erfindungsgemäße Schaltwalzenanordnung,
- Fig. 3: eine perspektivische zweite Ansicht auf die Schaltwalzenanordnung der Figur 2,
- Fig. 4: eine Ansicht auf einen Ausschnitt der Schaltwalzenanordnung im Bereich der Schaltwalze mit Referenzelement,
- Fig. 5: eine Seitenansicht auf die Schaltwalzenanordnung,
- Fig. 6: eine schematische Darstellung der Abwicklung des Schaltwalzenkörpers der erfindungsgemäßen Schaltwalzenanordnung; und
- Fig. 7: einen Detailausschnitt der Abwicklung gemäß eines Details der Figur 6.

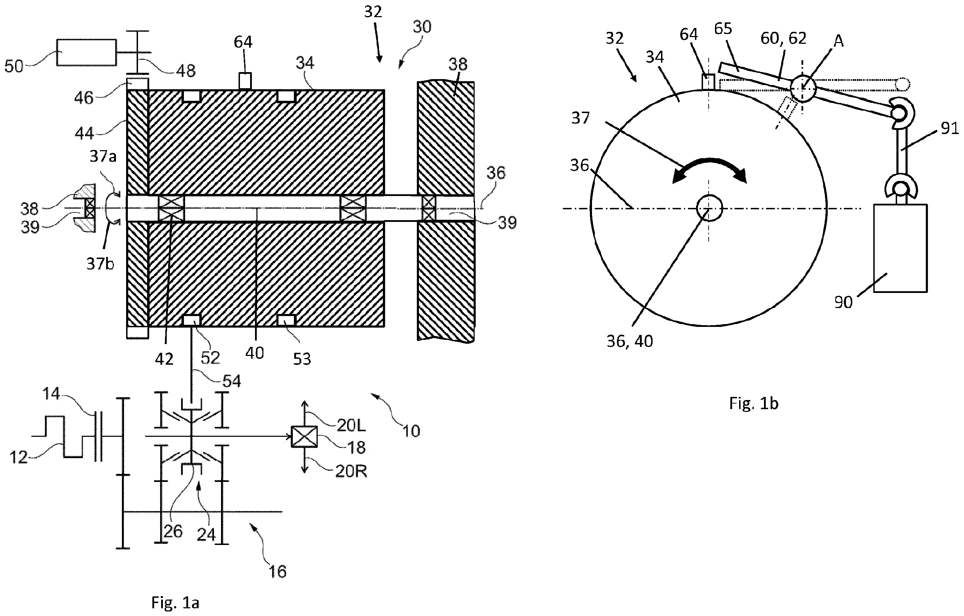

In Fig. 1a ist ein Antriebsstrang 10 für ein Kraftfahrzeug schematisch dargestellt. Der Antriebsstrang 10 weist einen Antriebsmotor 12 auf, der durch einen Verbrennungsmotor oder durch eine Hybrid-Antriebseinheit gebildet sein kann. Ferner beinhaltet der Antriebsstrang 10 eine Kupplungsanordnung 14, die als Einfachkupplung oder auch als Doppelkupplung realisiert sein kann. Eingangsseitig ist die Kupplungsanordnung 14 mit dem Antriebsmotor 12 verbunden. Ausgangsseitig ist die Kupplungsanordnung 14 mit einer Getriebeanordnung 16 zum Einrichten einer Mehrzahl von Gangstufen verbunden, wobei die Getriebeanordnung 16 in Fig. 1a schematisch als Stufengetriebe in Vorgelegebauweise dargestellt ist. Ein Ausgang der Getriebeanordnung 16 ist mit einem Differenzial 18 verbunden, mittels dessen Antriebsleistung auf angetriebene Räder 20L, 20R verteilbar ist.

Die Getriebeanordnung 16 weist zum Einrichten der unterschiedlichen Gangstufen eine Mehrzahl von Schaltkupplungen auf, von denen eine Schaltkupplungsanordnung in Form eines Schaltkupplungspaketes in Fig. 1 schematisch bei 24 dargestellt ist. Die Schaltkupplungsanordnung 24 dient alternativ dazu, einen ersten oder einen zweiten Radsatz (in Fig. 1 nicht näher bezeichnet) in den Leistungsfluss zu bringen (hierbei wird ein Losrad eines Radsatzes mit einer zugeordneten Welle verbunden). Die Schaltkupplungsanordnung 24 wird mittels einer Schaltmuffe 26 geschaltet, derart, dass entweder der eine Radsatz oder der andere Radsatz in den Leistungsfluss versetzbar ist, oder eine Neutralstellung der Schaltwalzenanordnung einrichtbar ist.

Zum axialen Bewegen und folglich Schalten der Schaltmuffe 26 und gegebenenfalls weiterer Schaltmuffen von weiteren Schaltkupplungsanordnungen der Getriebeanordnung 16 beinhaltet die Getriebeanordnung 16 eine Schaltvorrichtung 30. Die Schaltvorrichtung 30 ist als Schaltaktuatorik realisiert, derart, dass Gangstufen der Getriebeanordnung 16 automatisiert gewechselt werde können. Die Schaltvorrichtung 30 beinhaltet eine Schaltwalzenanordnung 32. Die Schaltwalzenanordnung 32 weist einen Schaltwalzenkörper 34 auf, der in zwei Drehrichtungen 37a, 37b um eine Drehachse 36 verdrehbar gelagert ist, und zwar verdrehbar in Bezug auf ein Gehäuse 38. Das Gehäuse 38 kann beispielsweise ein Gehäuse der Getriebeanordnung 16 sein.

An dem Gehäuse 38 können ein oder mehrere Schaltwalzenachsenaufnahmen 39 ausgebildet sein, in denen eine Schaltwalzenachse 40 aufgenommen ist.

Der Schaltwalzenkörper 34 ist mit einem Antriebsglied 44 verbunden, und zwar an einer axialen Stirnseite hiervon. Das Antriebsglied 44 kann beispielsweise durch ein Zahnrad gebildet sein, das eine Außenverzahnung 46 aufweist. Die Außenverzahnung 46 des Antriebsgliedes 44 kann beispielsweise mit einem Antriebsritzel 48 eines Schaltwalzenmotors 50 in Eingriff stehen. Der Schaltwalzenmotor 50 kann beispielsweise ein elektrischer Motor sein. Durch Ansteuern des Schaltwalzenmotors 50 kann der Schaltwalzenkörper 34 folglich in Rotation in Bezug auf das Gehäuse 38 versetzt werden.

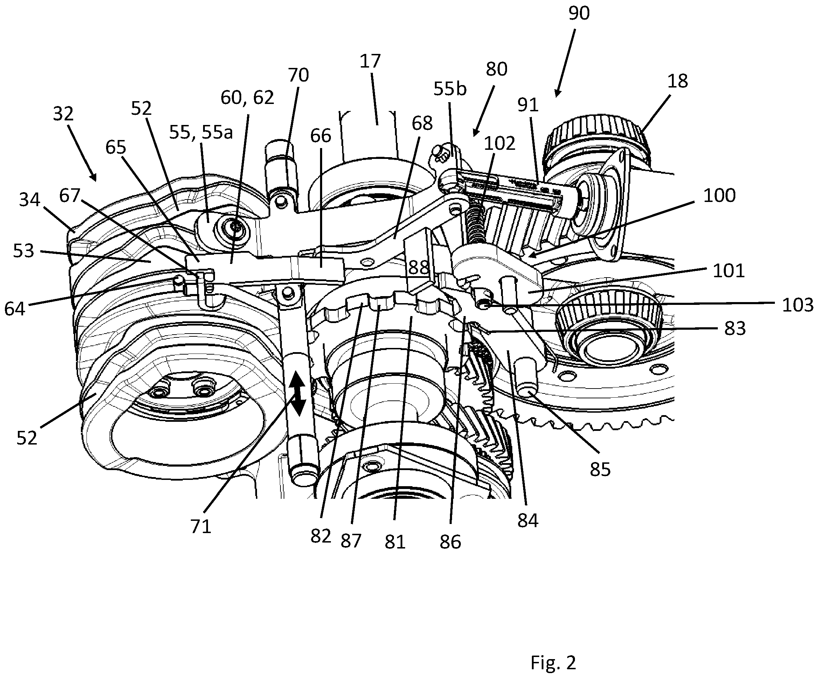

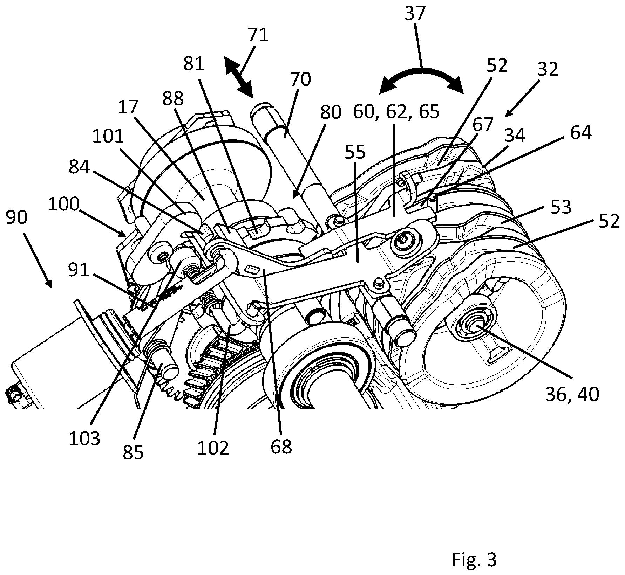

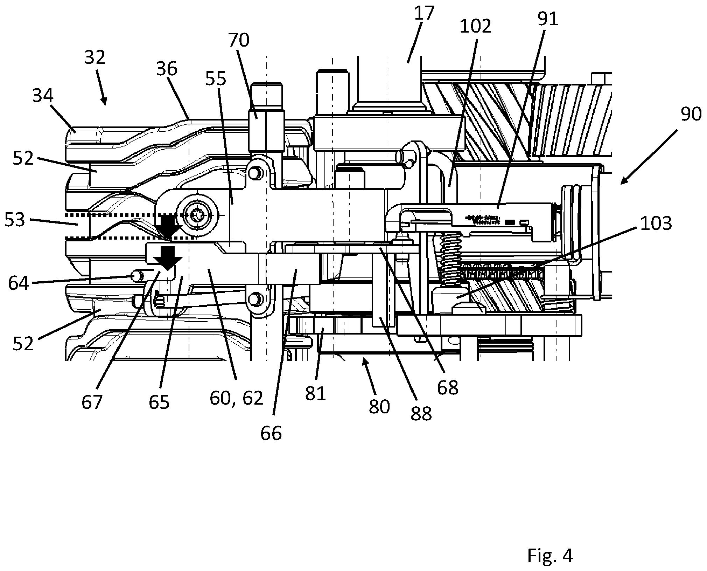

An dem Außenumfang des Schaltwalzenkörpers 34 sind eine erste Schaltkontur in Form einer ersten Schaltwalzennut 53 und eine Vielzahl von Schaltkonturen in Form von zweiten Schaltkonturen in Form von zweiten Schaltwalzennuten 52a, 52b ausgebildet, die wie man es aus den Figuren 2-4 erkennen kann axial konturiert sind. Die erste Schaltwalzennut sowie die zweiten Schaltwalzennuten sind endlos umlaufend um den Schaltwalzenkörper 34 ausgeführt.

In die zweiten Schaltwalzennuten 52a, 52b greift jeweils ein zweites Schaltelement 54 ein, welches zudem an der zugeordneten Schaltmuffe 26 angreift. Das zweite Schaltelement 54 weist dabei einen Nutenstein auf, der in die korrespondierende Schaltwalzennut eingreift. Ein Verdrehen des Schaltwalzenkörpers 34 führt bei geeigneter Ausführung der zweiten Schaltwalzennut 52a bzw. 52b folglich zu einem axialen Versatz des zweiten Schaltelements 54 und folglich zu einem axialen Versatz der Schaltmuffe 26, was mit dem Ein- oder Auslegen einer Gangstufe einhergeht. In die erste Schaltwalzennut 53 greift ein erstes Schaltelement 55 ein. Ein Verdrehen des Schaltwalzenkörpers 34 führt bei geeigneter Ausführung der ersten Schaltwalzennut 53 zu einem axialen Versatz des ersten Schaltelements 55 und bei einer Weiterbildung des Erfindungsgedankens zu einem Betätigen eines Parksperrensystems 80.

Des Weiteren umfasst der Schaltwalzenkörper 34 ein Referenzelement 64, welches in dem gezeigten Ausführungsbeispiel als Zapfen/Pin ausgeführt ist. Das Referenzelement 64 definiert eine radiale Position des Schaltwalzenkörpers 34 und dient somit zur Festlegung einer Referenzwinkelposition. Zur Identifizierung dieser Referenzwinkelposition kann das Referenzelement 64 mit einem Anschlagelement 62 einer Anschlageinrichtung 60 zusammenwirken.

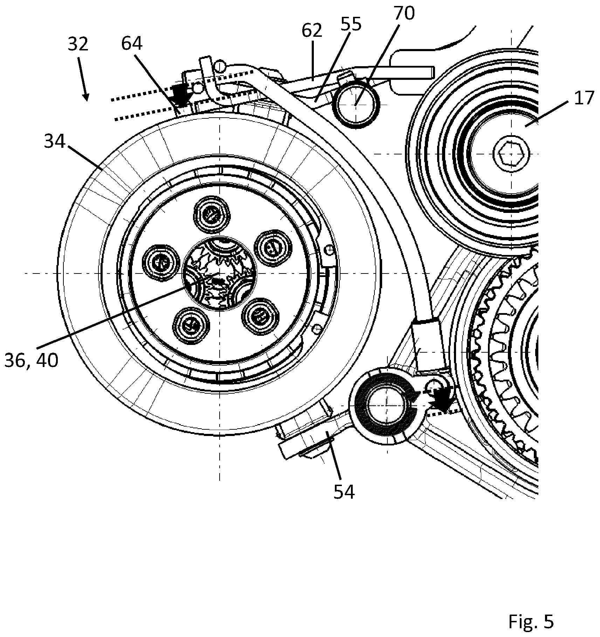

Die Anschlageinrichtung 60 ist schematisch in der Figur 1b dargestellt und umfasst ein als Hebel ausgeführtes Anschlagelement 62, welches um eine Achse A verschwenkbar gelagert ist. Diese Achse A verläuft parallel zu der Schaltwalzenachse 40. Das Anschlagelement 62 kann zwischen einer "Neutralposition", in der das Anschlagelement 62 nicht mit dem Referenzelement 64 in Eingriff bringbar ist, und einer "Aktivierungsposition" in der das Anschlagelement 62, vorzugsweise der Endbereich in Eingriff mit dem Referenzelement 64 bringbar ist, verschwenkt werden. Wie es in der Figur 5 zu erkennen ist, ist das Anschlagelement 62 mit dem Referenzelement 64 in der Referenzwinkelposition in Eingriff.

Bei einer Aktivierung des Anschlagelementes 62 und Verlagern des Anschlagelementes 62 in die Aktivierungsposition wird der Schaltwalzenkörper 34 solange weitergedreht, bis das Anschlagelement 62 an das Referenzelement 64 anschlägt und das Verdrehen des Schaltwalzenkörpers 34 blockiert wird. Diese blockierte Position entspricht der Referenzwinkelposition in der eine Referenzierung des Schaltwinkels erfolgt.

Die in der Figur 1b dargestellte nach oben verschwenkte Stellung des Anschlagelements 62 zeigt die Neutralposition. Die mit einer gestrichelten Linie eingezeichnete Stellung zeigt die Referenzwinkelposition.

Eine Betätigung des Anschlagelements 62 erfolgt über einen Aktuator 90. Dieser überträgt über ein Koppelelement 91 seine Linearbewegung auf das Anschlagelement 62. In der schematisch dargestellten Abbildung der Figur 1b ist das Koppelelement 91 unmittelbar an dem Anschlagelement 62 angebunden. Die nachfolgende Beschreibung des dargestellten Ausführungsbeispiels der Figuren 2 bis 5 zeigt eine Übersetzung der Verstellbewegung des Koppelelements 91 über einen weiteren Hebel 68 auf das Anschlagelement 62.

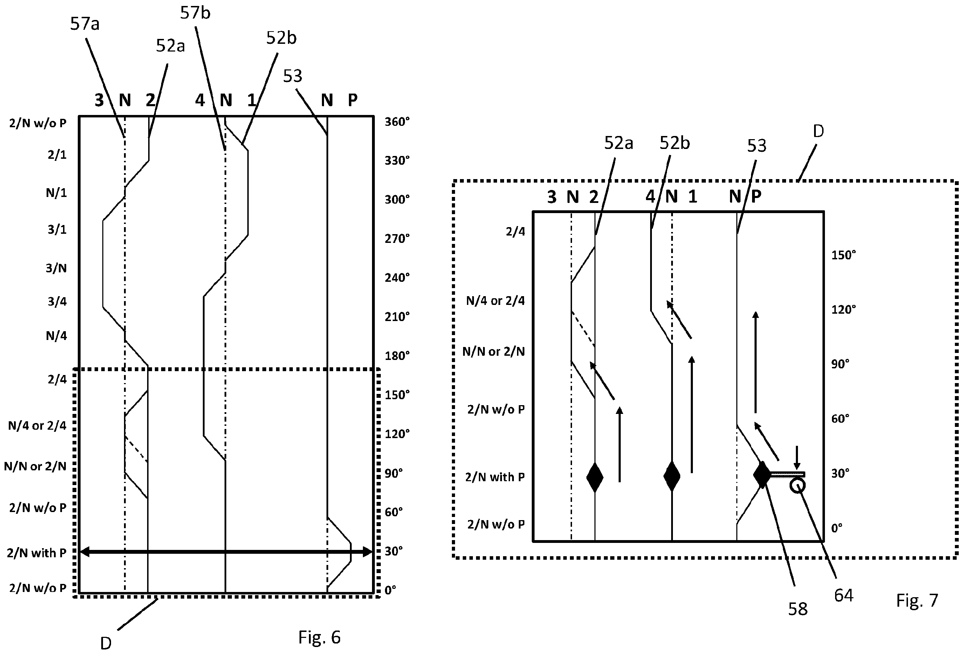

Die Figuren 2 bis 5 zeigen die erfindungsgemäße Schaltwalzenanordnung in einer Ausführungsform, die zusätzlich ein Parksperrensystem 80 umfasst. Bei dieser Ausführungsform wird das erste Schaltelement 55 für die Betätigung des Parksperrensystems 80 mit verwendet. Wie obenstehend bereits erläutert, greift das erste Schaltelement 55 in die erste Schaltwalzennut 53 ein, welches ein axiales Verlagern in eine axiale Referenzwinkelposition und gleichzeitig in die Parkposition (siehe Figur 6 und 7 beispielhaft bei 30 Grad) ermöglicht. Das erste Schaltelement 55 weist einen ersten Endbereich 55a und einen zweiten Endbereich 55b auf. Der erste Endbereich 55a ist mit einem Nutenstein 58 ausgeführt, der in die erste Schaltwalzennut 53 eingreift. Ein Verdrehen des Schaltwalzenkörpers 34 führt bei geeigneter Ausführung der ersten Schaltwalzennut 53 folglich zu einem axialen Versatz des ersten Schaltelements 55 (Aktivieren / Deaktivieren der Parkstellung).

Wie es aus den Figuren 2-4 zu erkennen ist, ist das erste Schaltelement 55 auf einer axial verschiebbar gelagerten Lagerachse 70 befestigt. Die Lagerachse 70 verläuft parallel zur Drehachse 36. Die Verschiebbarkeit der Lagerachse 70 ist durch den Pfeil 71 dargestellt.

Das Anschlagelement 62, ist benachbart zu dem ersten Schaltelement 55 verschwenkbar zwischen der "Neutralposition" und der "Aktivierungsposition" um die Achse A gelagert. In der Figur 5 ist das Anschlagelement 62 in der "Aktivierungsposition" gezeigt. Die obere gestrichelte Linie zeigt die "Neutralposition" des Anschlagelements 62. Das Anschlagelement 62 ist als Hebel mit einem erstem Endbereich 65 und einem zweiten Endbereich 66 ausgebildet. Der erste Endbereich 65 kann in der entsprechenden "Aktivierungsposition" mit dem Referenzelement 64 als Anschlag in Eingriff gebracht werden. In der "Neutralposition" befindet sich das Anschlagelement 62 im Uhrzeigersinn verdreht um die Achse A (schematisch dargestellt in Fig. 1b) so dass der erste Endbereich 65 maximal nach oben geschwenkt ist und kein Eingriff mit dem Referenzelement 64 erfolgen kann. Sobald eine axiale Verlagerung des ersten Schaltelements 55 in die axiale Referenzposition/Schaltwinkelbereich erfolgt, wird eine Verlagerung des Anschlagelements 62 durch Aktivierung eines Aktuators 90 bewirkt, was ein Verschwenken des Anschlagelements 62 entgegen dem Uhrzeigersinn zur Folge hat. Hierdurch wird der ersten Endbereichs 65 in Richtung des Pfeils nach unten verlagert, was als Folge ein Blockieren der Drehbewegung des Schaltwalzenkörpers 34 aufgrund der "Kollision" des Referenzelementes 64 mit dem Endbereich 65 des Anschlagelementes 62 hat.

In einer alternativen Ausführungsform kann die Aktivierung der Verlagerung des Anschlagelements 62 auch nach der axialen Verlagerung des ersten Schaltelementes 55 über den Aktuator 90 erfolgen.

Der Aktuator 90 ist beispielsweise ein Linear-Solenoid Aktuator (Schaltmagnet) und kann über ein Koppelelement 91 seine Linearbewegung auf den Hebel 68 übertragen, der diese in eine Drehbewegung überträgt. Hierzu ist der Hebel 68 auf dem ersten Schaltelement 55 drehbeweglich gelagert und mittels seines ersten Endbereichs 68a an dem Aktuator 90 und mittels seines zweiten Endbereichs 68b über die Achse A an dem zweiten Endbereich 66 des Anschlagelementes 62 angelenkt. Eine Verstellbewegung des Koppelelementes 91 des Aktuators 90 in Richtung des Pfeils 92 führt in Folge zu einem Verschwenken des Anschlagelementes 62 entgegen dem Uhrzeigersinn in die Referenzwinkelposition, wodurch der erste Endbereich 65 in der entsprechenden Drehwinkelposition 30 Grad (Fig. 7) als Schaltanschlag für das Referenzelement 64 dient und eine Verdrehung des Schaltwalzenkörpers blockiert ist. Diese Position als Referenzwinkelposition ist zum Referenzieren der Drehstellung des Schaltwalzenkörpers 34 verwendbar.

Des Weiteren entspricht die erste Referenzwinkelposition in der Ausführungsform mit kombiniertem Parksperrensystem 80 der Parkposition, die in den Figuren 6 und 7 dargestellt ist. Diese wird bevorzugt, da sowohl die Referenzierung als auch die Aktivierung der automatisierten Parksperre erst im Fahrzeugstillstand erfolgen.

Das Parksperrensystem 80 ist der Eingangswelle 17 der Getriebeanordnung 16 zugeordnet und kann sich an dem Gehäuse 38 abstützen, um ein mit dem Antriebsstrang 10 ausgestattetes Kraftfahrzeug zu immobilisieren. In einer alternativen Ausgestaltung kann das Parksperrensystem auch der Ausgangswelle zugeordnet sein.

Demgemäß weist das Parksperrensystem 80 ein Parksperrenrad 81 auf, das drehfest mit der Eingangswelle 17 verbunden ist. An einem Außenumfang des Parksperrenrades 81 ist eine Parksperrenverzahnung 82 ausgebildet. Das Parksperrensystem 80 beinhaltet ferner eine Parksperrenklinke 84, die um eine Klinkenachse 85 verschwenkbar ausgebildet ist. Die Klinkenachse 85 ist gehäusefest und ist vorzugsweise parallel zu der Eingangswelle 17 ausgerichtet. Die Parksperrenklinke 84 ist, zwischen einer Sperrposition in der Parkposition und einer Freigabeposition, in der eine Drehung der Eingangswelle mit Parksperrenrad 81 möglich ist, verlagerbar.

An der Parksperrenklinke 84 ist ein Klinkenzahn 86 ausgebildet, der zur Einrichtung einer Sperrposition der Parksperrensystem 80 in eine Zahnlücke 87 der Parksperrenverzahnung 82 greifen kann.

Um die Parksperrenklinke 84 in der Freigabeposition zu halten, kann eine Halteeinrichtung 83 in Form einer Schenkelfeder vorgesehen sein.

Vorliegend wie in der Figur 2 dargestellt, wird die Parksperrenklinke 84 jedoch in der Freigabeposition mittels eines Arretiergliedes 88 formschlüssig gehalten, also in der Freigabeposition arretiert. Das Arretierglied 88 ist mit dem Hebel 68 verbunden und greift beispielsweise an einer radialen Innenseite der Parksperrenklinke 84 an, insbesondere an einem Halteabschnitt 89 der Parksperrenklinke 84. In der Neutralposition des Anschlagelements 62, das über die Achse A an den Hebel 68 angebunden ist, hält das Arretierglied 88 die Parksperrenklinke 84 in der Freigabeposition, so dass ein unbeabsichtigtes Einrasten des Klinkenzahnes 86 in eine Zahnlücke 87 sicher vermieden werden kann. Dies ist auch dann sichergestellt, wenn das erste Schaltelement 55 in der ersten Schaltwalzennut 53 die Parkposition bei 30 Grad durchfährt.

Um die Parksperrenklinke 84 entgegen der Federvorspannung in die Sperrposition zu verlagern ist eine geeignete Vorspanneinheit 100 vorgesehen. Diese umfasst einen Gegenanschlag 101, sowie einen auf einer parallel zur Eingangswelle verlaufenden Betätigungsstange 102 mit einem endseitig angeordneten federvorgespannten Vorspannkonus 103. Die Betätigungsstange 102 ist an dem zweiten Endbereich 55b des ersten Schaltelements 55 angebunden. Der Vorspannkonus 103 liegt einerseits an einer radialen Außenseite der Parksperrenklinke 84 und andererseits auf seiner gegenüberliegenden Umfangsseite an einem Abschnitt des Gegenanschlags 101 an.

Sobald der Hebel 68 durch eine Verstellbewegung des Aktuators 90 entgegen dem Uhrzeigersinn verlagert wird, wird das Arretierglied 88 entsprechend mit nach oben verschwenkt und gelangt außer Eingriff mit dem Halteabschnitt 89 der Parksperrenklinke 84. In dieser entriegelten Situation der Parksperrenklinke 84 befindet sich wie obenstehend erläutert das erste Schaltelement 55 in der axial verlagerten Parkposition. Diese Verlagerung entspricht einer Verschiebung längs der Lagerachse 70 in Richtung auf das Parksperrenrad. Die Verschwenkung des Hebels 68 mitsamt Arretierglied 88 kann auch schon zeitlich vor der axialen Verschiebung des ersten Schaltelements 55 erfolgen. Aufgrund der Federvorspannung wird der Vorspannkonus 103 in den Zwischenraum zwischen Gegenanschlag 101 und Parksperrenklinke 84 geschoben und übt eine Kraft auf die radiale Außenseite der Parksperrenklinke 84 aus. Die Parksperrenklinke 84 verschwenkt radial auf das Parksperrenrad 81 zu, so dass der Klinkenzahn 86 in eine Zahnlücke 87 eingreift.

Die Darstellung der Figur 6 zeigt eine schematische Darstellung einer Abwicklung des Schaltwalzenkörpers 34 im Bereich von zwei zweiten Schaltwalzennuten 52a, 52b sowie der ersten Schaltwalzennut 53. Die zweiten Schaltwalzennuten 52a, 52b, sowie die erste Schaltwalzennut 53 erstrecken sich um den gesamten Umfangsabschnitt des Schaltwalzenkörpers (360 Grad), so dass der Schaltwalzenkörper endlos in einer ersten Drehrichtung und einer zweiten Drehrichtung 37 verdreht werden kann.

In die erste der zweiten Schaltwalzennuten 52a greift ein erstes der zweiten Schaltelemente 54 ein, die vorliegend den Gangstufen 3 und 2 zugeordnet ist.

In die zweite der zweiten Schaltwalzennuten 52b greift ein zweites der zweiten Schaltelemente 54 ein, die vorliegend den Gangstufen 4 und 1 zugeordnet ist.

Die zweiten Schaltwalzennuten 52a, 52b, sowie die erste Schaltwalzennut 53 weisen jeweils eine Neutrallinie 57a, 57b auf.

In die erste Schaltwalzennut 53 greift das erste Schaltelement 55 ein, das zwischen einer Neutralposition und einer Parkposition verstellbar ist. Die als erste Schaltwalzennut 53 ausgeführte Schaltkontur umfasst einen ersten Schaltabschnitt, der einem Referenzwinkel zugeordnet ist, der in dem Ausführungsbeispiel 30 Grad beträgt. Wie man es aus der Detaildarstellung der Figur 7 erkennen kann, wird die Parkposition sowie die Referenzwinkelposition bei 30 Grad erreicht. Dies ist mit der Darstellung des Nutensteins 58 des ersten Schaltelements 55 angezeigt. Wie es weiterhin aus der Skizze zu erkennen ist, beginnt ein axiales Verlagern des ersten Schaltelements 55 bei in etwa 0 Grad. Bei 30 Grad ist die axiale Verlagerung in der Parkposition beendet. Ausgehend von der Parkposition wird dann die axiale Verlagerung des ersten Schaltelements 55 in Richtung auf die Neutralposition zurück bis in etwa 60 Grad bewirkt.

In der gezeigten Ausführung des Schaltwalzenkörpers 34, in der Parkposition bei 30 Grad befindet sich das zweite Schaltelement 54 in eine nach rechts verlagerter Position, so dass die Gangstufe 2 eingelegt ist.

### Bezugszeichenliste

- 10: Antriebsstrang
- 12: Antriebsmotor
- 14: Kupplungsanordnung
- 16: Getriebeanordnung
- 17: Eingangswelle
- 18: Differential
- 20: Angetriebene Räder
- 24: Schaltkupplungsanordnung
- 26: Schaltmuffe
- 30: Schaltvorrichtung
- 32: Schaltwalzenanordnung
- 34: Schaltwalzenkörper
- 36: Drehachse
- 37a, b: Drehrichtung
- 38: Gehäuse
- 39: Schaltwalzenachsenaufnahme
- 40: Schaltwalzenachse
- 42: Schaltwalzenlageranordnung
- 44: Antriebsglied
- 46: Verzahnung
- 48: Antriebsritzel
- 50: Schaltwalzenmotor
- 52a: zweite Schaltwalzennut(en)
- 52b: zweite Schaltwalzennut
- 53: erste Schaltwalzennut
- 54: zweites Schaltelement
- 55: erstes Schaltelement
- 55a: erster Endbereich
- 55b: zweiter Endbereich
- 57a: Neutrallinie
- 57b: Neutrallinie
- 58: Nutenstein
- 60: Anschlageinrichtung
- 62: Anschlagelement
- 64: Referenzelement
- 65: erster Endbereich
- 66: zweiter Endbereich
- 68: Hebel
- 68a: erster Endbereich
- 68b: zweiter Endbereich
- 70: Lagerachse
- 71: Pfeil
- 80: Parksperrensystem
- 81: Parksperrenrad
- 82: Parksperrenverzahnung
- 83: Halteeinrichtung
- 84: Parksperrenklinke
- 85: Klinkenachse
- 86: Klinkenzahn
- 87: Zahnlücke
- 88: Arretierglied
- 89: Halteabschnitt
- 90: Aktuator
- 91: Koppelelement
- 92: Pfeil
- 100: Vorspanneinheit
- 101: Gegenanschlag
- 102: Betätigungsstange
- 103: Vorspannkonus
- A: Achse

## Patentansprüche

1. Schaltwalzenanordnung (32) für eine Schaltvorrichtung (30) einer Getriebeanordnung (16), insbesondere für Kraftfahrzeuge, mit einem Schaltwalzenkörper (34), sowie einem ersten Schaltelement (55), wobei der Schaltwalzenkörper (34) um eine Drehachse (36) drehbar ist und eine am Umfang der Außenfläche verlaufende Schaltkontur in Form einer ersten Schaltwalzennut (53) umfasst, in die das erste Schaltelement (55) eingreift, wobei die Schaltkontur in einer axialen und/oder radialen Richtung ausgebildet ist, und wobei folglich das erste Schaltelement (55) durch Drehen des Schaltwalzenkörpers (34) mittels der zugeordneten Schaltkontur in axialer Richtung des Schaltwalzenkörpers (34) verschoben wird, und mit einer Anschlageinrichtung (60) zum Referenzieren eines Schaltwinkels des Schaltwalzenkörpers (34) in einer Referenzwinkelposition, wobei die Anschlageinrichtung (60) einen Schaltanschlag zum Blockieren des Verdrehens des Schaltwalzenkörpers (34) in der Referenzwinkelposition umfasst, wobei der Schaltanschlag mittels eines Anschlagelementes (62) und eines als Gegenanschlag ausgeführtes Referenzelement (64) gebildet wird, **dadurch gekennzeichnet, dass** die erste Schaltwalzennut (53) umlaufend um den Schaltwalzenkörper (34) ausgeführt ist, so dass der Schaltwalzenkörper (34) in beide Drehrichtungen endlos verdrehbar ist, und dass das Referenzelement (64) als radial sich erstreckender Zapfen/Pin ausgeführt ist, der in der Referenzwinkelposition am Umfang der Außenfläche des Schaltwalzenkörpers (34) angeordnet ist, und das Anschlagelement (62) als Hebel mit einem erstem Endbereich (65) und einem zweiten Endbereich (66) ausgebildet ist und das Anschlagelement (62) um eine Achse, die parallel zu der Drehachse (36) verläuft zwischen einer Neutralposition, in der das Anschlagelement (62) beim Verdrehen des Schaltwalzenkörpers (34) in der Referenzwinkelposition nicht mit dem Referenzelement (64) in Eingriff ist, und einer Aktivierungsposition in der der erste Endbereich (65) in der Referenzwinkelposition in Eingriff mit dem Referenzelement (64) ist und das Verdrehen des Schaltwalzenkörpers (34) blockiert wird, verschwenkbar gelagert ist, wobei die Aktivierung des Schaltanschlags über einen Aktuator (90) erfolgt, wobei der Aktuator (90) ein Linearaktuator ist und insbesondere einen Schaltmagneten umfasst, der eine lineare Verstellbewegung über ein Koppelelement (91) auf einen ersten Endbereich (68a) eines Hebels (68) überträgt, wobei dieser drehbeweglich gelagert ist, und wobei der zweite Endbereich (68b) des Hebels (68) an dem zweiten Endbereich (66) des Anschlagelementes (62) zur Einleitung einer Verschwenkbewegung angelenkt ist.

2. Schaltwalzenanordnung (32) für eine Schaltvorrichtung (30) einer Getriebeanordnung (16) nach Anspruch 1, **dadurch gekennzeichnet, dass** die erste Schaltwalzennut (53) zumindest einen ersten Schaltabschnitt umfasst, der dem Schaltwinkel bzw. der Referenzwinkelposition zugeordnet ist

3. Getriebeeinheit für einen Antriebsstrang (10) eines Kraftfahrzeugs, mit einer Schaltvorrichtung zum Schalten von Gangstufen, wobei die Schaltvorrichtung eine Schaltwalzenanordnung (32) nach einem der vorgenannten Ansprüche aufweist.

4. Getriebeeinheit für einen Antriebsstrang (10) eines Kraftfahrzeugs mit einer Schaltwalzenanordnung (32) für eine Schaltvorrichtung (30) nach Anspruch 3, **dadurch gekennzeichnet, dass** die Referenzwinkelposition des Anschlagelementes (62) einer Parkposition entspricht in der eine Immobilierung des Kraftfahrzeugs über ein Parksperrensystem (80) erfolgt.

## Claims

1. Gear shift drum assembly (32) for a shift device (30) of a transmission assembly (16), in particular for motor vehicles, with a gear shift drum body (34) and also a first shifting element (55), wherein the gear shift drum body (34) can be rotated about an axis of rotation (36) and comprises a shifting contour which extends around the circumference of the outer surface and is in the form of a first gear shift drum groove (53), in which the first shifting element (55) engages, wherein the shifting contour is formed in an axial and/or radial direction, and wherein consequently the first shifting element (55) is displaced by rotating the gear shift drum body (34) by means of the associated shifting contour in the axial direction of the gear shift drum body (34), and with a stop device (60) for referencing a shifting angle of the gear shift drum body (34) in a reference angle position, the stop device (60) comprising a shifting stop for blocking the rotation of the gear shift drum body (34) in the reference angle position, wherein the shifting stop is formed by means of a stop element (62) and a reference element (64) in the form of a counter stop, **characterized in that** the first gear shift drum groove (53) runs around the gear shift drum body (34) such that the gear shift drum body (34) can be rotated endlessly in both rotational directions, and **in that** the reference element (64) is in the form of a radially extending peg/pin, which in the reference angle position is arranged on the circumference of the outer surface of the gear shift drum body (34), and the stop element (62) is in the form of a lever with a first end region (65) and a second end region (66) and the stop element (62) is mounted pivotably about an axis extending parallel to the axis of rotation (36) between a neutral position, in which the stop element (62) on rotation of the gear shift drum body (34) in the reference angle position is not in engagement with the reference element (64), and an activation position, in which the first end region (65) in the reference angle position is in engagement with the reference element (64) and the rotation of the gear shift drum body (34) is blocked, wherein the activation of the shifting stop is effected via an actuator (90), wherein the actuator (90) is a linear actuator and in particular comprises a shifting magnet, which transfers a linear adjusting movement via a coupling element (91) to a first end region (68a) of a lever (68), the latter being rotatably mounted, and wherein the second end region (68b) of the lever (68) is articulated on the second end region (66) of the stop element (62) to introduce a pivoting movement.

2. Gear shift drum assembly (32) for a shift device (30) of a transmission assembly (16) according to Claim 1, **characterized in that** the first gear shift drum groove (53) comprises at least a first shifting portion, which is assigned to the shifting angle or to the reference angle position.

3. Transmission unit for a drivetrain (10) of a motor vehicle, with a shift device for shifting gear stages, wherein the shift device has a gear shift drum assembly (32) according to either of the preceding claims.

4. Transmission unit for a drivetrain (10) of a motor vehicle with a gear shift drum assembly (32) for a shift device (30) according to Claim 3, **characterized in that** the reference angle position of the stop element (62) corresponds to a parked position in which the motor vehicle is immobilized via a parking lock system (80).

## Revendications

1. Ensemble tambour de changement de vitesse (32) pour un dispositif de changement de vitesse (30) d'un bloc de transmission (16), en particulier pour véhicules automobiles, comportant un corps de tambour de changement de vitesse (34), ainsi qu'un premier élément de changement de vitesse (55), dans lequel le corps de tambour de changement de vitesse (34) peut tourner autour d'un axe de rotation (36) et comprend un contour de changement de vitesse s'étendant à la périphérie de la surface extérieure, sous la forme d'une première rainure de tambour de changement de vitesse (53) dans laquelle le premier élément de changement de vitesse vient en prise (55), dans lequel le contour de changement de vitesse est formé dans une direction axiale et/ou radiale, et dans lequel par conséquent le premier élément de changement de vitesse (55) est déplacé dans la direction axiale du corps de tambour de changement de vitesse (34) par rotation du corps de tambour de changement de vitesse (34) à l'aide du contour de changement de vitesse associé, et comportant un dispositif de butée (60) permettant de référencer un angle de changement de vitesse du corps de tambour de changement de vitesse (34) dans une position angulaire de référence, dans lequel le dispositif de butée (60) comprend une butée de changement de vitesse permettant de bloquer la rotation du corps de tambour de changement de vitesse (34) dans la position angulaire de référence, dans lequel la butée de changement de vitesse est formée à l'aide d'un élément de butée (62) et d'un élément de référence (64) réalisé sous forme de butée conjuguée, **caractérisé en ce que** la première rainure de tambour de changement de vitesse (53) est réalisée de manière périphérique autour du corps de tambour de changement de vitesse (34), de sorte que le corps de tambour de changement de vitesse (34) puisse tourner sans fin dans les deux sens de rotation, et **en ce que** l'élément de référence (64) est réalisé sous forme de tourillon/goupille s'étendant radialement, qui est disposé(e) à la périphérie de la surface extérieure du corps de tambour de changement de vitesse (34) dans la position angulaire de référence, et l'élément de butée (62) est réalisé sous forme de levier comportant une première région d'extrémité (65) et une deuxième région d'extrémité (66) et l'élément de butée (62) est monté pivotant autour d'un axe qui s'étend parallèlement à l'axe de rotation (36) entre une position neutre, dans laquelle l'élément de butée (62) n'est pas en prise avec l'élément de référence (64) lors de la rotation du corps de tambour de changement de vitesse (34) dans la position angulaire de référence, et une position d'activation, dans laquelle la première région d'extrémité (65) est en prise avec l'élément de référence (64) dans la position angulaire de référence et la rotation du corps de tambour de changement de vitesse (34) est bloquée, l'activation de la butée de changement de vitesse s'effectuant par le biais d'un actionneur (90), l'actionneur (90) étant un actionneur linéaire et comprenant en particulier un aimant de changement de vitesse, qui transmet un mouvement de réglage linéaire à une première région d'extrémité (68a) d'un levier (68) par le biais d'un élément d'accouplement (91), ce levier étant monté de manière mobile en rotation, et la deuxième région d'extrémité (68b) du levier (68) étant articulée sur la deuxième région d'extrémité (66) de l'élément de butée (62) pour l'introduction d'un mouvement de pivotement.

2. Ensemble tambour de changement de vitesse (32) pour un dispositif de changement de vitesse (30) d'un bloc de transmission (16) selon la revendication 1, **caractérisé en ce que** la première rainure de tambour de changement de vitesse (53) comprend au moins une première partie de changement de vitesse qui est associée à l'angle de changement de vitesse ou à la position angulaire de référence.

3. Unité de transmission pour une chaîne cinématique (10) d'un véhicule automobile, comportant un dispositif de changement de vitesse permettant de changer des rapports, le dispositif de changement de vitesse présentant un ensemble tambour de changement de vitesse (32) selon l'une des revendications précédentes.

4. Unité de transmission pour une chaîne cinématique (10) d'un véhicule automobile comportant un ensemble tambour de changement de vitesse (32) pour un dispositif de changement de vitesse (30) selon la revendication 3, **caractérisée en ce que** la position angulaire de référence de l'élément de butée (62) correspond à une position de stationnement dans laquelle une immobilisation du véhicule automobile par le biais d'un système de verrouillage de stationnement (80) a lieu.
